# EUROPÄISCHE PATENTSCHRIFT

(11) **EP 2 039 548 B1**
(45) Veröffentlichungstag und Bekanntmachung des Hinweises auf die Patenterteilung: **30.10.2013**
(21) Anmeldenummer: 08015515.3
(22) Anmeldetag: 03.09.2008
(51) Int. Cl.: B60J 1/20

(54) **Abdeckeinrichtung für eine verschiebbar gelagerte Fahrzeugscheibe**
Covering device for a slidably mounted vehicle window
Dispositif de recouvrement pour une vitre de véhicule installée de manière coulissante

(30) Priorität: 18.09.2007 DE 102007045613
(43) Veröffentlichungstag der Anmeldung: 25.03.2009
(73) Patentinhaber: BOS GmbH & Co. KG, 73760 Ostfildern (DE)
(72) Erfinder: Hansen, Melf, 75053 Gondelsheim (DE)
(74) Vertreter: Wilhelm, Peter

(56) Entgegenhaltungen:
- DE-A1- 10 346 854
- JP-A- 2004 042 772
- JP-U- 50 057 723
- JP-U- 63 018 318
- JP-U- 63 189 910
- US-A- 5 605 370
- US-B1- 6 523 880

## Beschreibung

Die Erfindung betrifft eine Abdeckeinrichtung für eine verschiebbar gelagerte Fahrzeugscheibe, eine Vorrichtung umfassend eine Abdeckenrichtung und eine verschiebbare Fahrzeugscheibe sowie eine Steuereinrichtung zum Antreiben eines Stellantriebs für eine entsprechende Vorrichtung.

Es ist allgemein bekannt, zum Schutz gegen störend einfallende Sonnenstrahlen an Fahrzeugfenstern, insbesondere an Fahrzeugseitenfenstern und/oder Panoramafenstern, Sonnenschutzelemente anzubringen. Diese sind beispielsweise mittels Gummipfropfen an den Fahrzeugscheiben lösbar befestigt. Bei Nichtgebrauch sind entsprechende Element im Fahrzeug zu verstauen.

Daneben sind Abdeckeinrichtungen bekannt, welche zwischen einer Verstauposition und einer Gebrauchsposition manuell oder mittels eines Stellantriebs verfahrbar in dem Fahrzeug angebracht sind. Entsprechende Abdeckeinrichtungen, welche beispielsweise als Sonnenschutzrollos oder als Sichtschutzrollos ausgebildet sind, weisen ein Flächengebilde auf, das manuell durch einen Nutzer in eine gewünschte Position gebracht werden. Für einen besseren Komfort kann ein Stellantrieb vorgesehen sein, durch welchen ein voll- oder halbautomatisches Verfahren des Flächengebildes möglich ist. Für diesen Stellantrieb ist jedoch in einer Fahrzeugtüre oder einem Fahrzeughimmel ein entsprechender Stauraum vorzusehen.

Das Dokument US 6,523,880 B1 offenbart eine über den Motor der Seitenscheibe angetriebene Abdeckeinrichtung.

Es ist eine Aufgabe der Erfindung, eine Abdeckeinrichtung zu schaffen, durch welches auf einfache Weise eine Fahrzeugscheibe zumindest teilweise verdeckbar ist. Es ist eine weitere Aufgabe der Erfindung, eine Vorrichtung umfassend eine entsprechende Abdeckeinrichtung und eine Steuereinrichtung für eine derartige Vorrichtung zu schaffen.

Diese Aufgabe wird gelöst durch eine Abdeckeinrichtung gemäß Anspruch 1. Unter Koppeln wird im Sinne der Erfindung eine werkzeuglos herstell- und lösbare Verbindung verstanden.

Das Auszugselement ist beispielsweise ein Auszugsprofil, welches mit einer freien Kante der Abdeckeinrichtung verbunden ist. Durch ein Koppeln des Auszugselements mit der Fahrzeugscheibe ist es möglich, auf einen eigenen Stellantrieb für das Flächengebilde zu verzichten. Das Flächengebilde wird mit der Fahrzeugscheibe bewegt. Weiter ist es möglich, eine Kopplung zwischen dem Auszugselement und der Fahrzeugscheibe zu lösen, so dass die Fahrzeugscheibe auch unabhängig von dem flexiblen Flächengebilde bewegbar ist.

Die Fahrzeugscheibe ist beispielsweise als Seitenfensterscheibe, als Schiebedachscheibe oder dergleichen gestaltet. Das flexible Flächengebilde ist in einer Ausgestaltung zumindest teilweise an einer Wickelwelle auf- und/oder abwickelbar angebracht. Durch die Wickelwelle ist ein platzsparendes und sicheres Verstauen des Flächengebildes in der Verstauposition möglich. Die Wickelwelle umfasst dabei in einer Ausgestaltung ein Kraftelement, insbesondere eine Wickelfeder, wobei ein Abwickeln des Flächengebildes entgegen der Kraft des Kraftelements erfolgt.

Gemäß der Erfindung ist ein Koppelmechanismus mit einem Schaltelement, insbesondere einen verschiebbaren Schaltschlitten, zum Koppeln und/oder Entkoppeln vorgesehen. Durch Bewegen des Schaltelements wird das Auszugselement mit der Fahrzeugscheibe gekoppelt oder eine Kopplung gelöst. Das Schaltelement wird in einer Ausgestaltung mit einem geeigneten Stellantrieb bewegt.

Gemäß der Erfindung umfasst der Koppelmechanismus eine push-push-Mechanik, insbesondere eine Herzkurven-Verriegelung. Als push-push-Mechanik wird dabei ein Verriegelungsmechanismus bezeichnet, bei welcher sowohl ein Verriegeln als auch ein Lösen durch Bewegen in eine gleiche Richtung erfolgt, vorzugsweise ist die Bewegung durch Aufbringen einer (Druck-)Kraft entgegen der Rückstellkraft eines Rückstellelements, wie einer Rückstellfeder bewirkbar. Eine entsprechende Mechanik wird auch als Kugelschreiber-Mechanik bezeichnet. Durch eine Kulissenführung in Form einer sogenannten Herzkurve ist eine entsprechende Mechanik auf einfache Weise realisierbar.

In einer weiteren Ausgestaltung der Erfindung weist das Schaltelement, insbesondere der Schaltschlitten eine Steuerfläche auf, welche zum Betätigen des Schaltelements mit einem an der Fahrzeugscheibe angebrachten Mitnehmer zusammenwirkt. Durch Bewegen der Scheibe in eine Schaltposition wird dabei der an der Fahrzeugscheibe vorgesehene Mitnehmer in eine Position bewegt, in welcher der Mitnehmer mit der Steuerfläche zusammenwirkt und so der Schaltschlitten bewegt wird. Eine Betätigung des Koppelmechanismus erfolgt daher indirekt durch Bewegung der Fahrzeugscheibe. Der Schaltschlitten ist in einer Ausgestaltung quer, insbesondere im Wesentlichen rechtwinklig, zu einer Verschieberichtung der Fahrzeugscheibe in einer Ebene der Fahrzeugscheibe oder parallel zu dieser verschiebbar gelagert. Der Mitnehmer dient dabei vorzugsweise auch als Koppelelement, so dass auf zusätzliche Elemente zum Koppeln mit dem Flächengebilde an der Fahrzeugscheibe verzichtet werden kann.

In einer vorteilhaften Ausgestaltung ist das mit dem Flächengebilde wirkverbundene Auszugselement mit der Fahrzeugscheibe form- und/oder kraftschlüssig koppelbar. Dabei erfolgt eine sichere Bewegungsübertragung beim Verschieben der Fahrzeugscheibe, wobei vorzugsweise eine Bewegungsübertragung in beide Verschieberichtungen möglich ist.

Diese Aufgabe wird weiter gelöst durch eine Vorrichtung zum Abdecken einer Fahrzeugfensteröffnung umfassend eine verschieblich lagerbare Fahrzeugscheibe und eine Abdeckeinrichtung nach einem der Ansprüche 1 bis 5.

Durch ein erfindungsgemäßes Koppelelement ist es möglich, auf einen separaten Antrieb zum Verfahren des Flächengebildes zu verzichten. Ein Verfahren des Flächengebildes erfolgt dabei über einen Betätigungsmechanismus des Fahrzeugfensters, wobei beispielsweise ein manueller Betätigungsmechanismus zum Verstellen mittels einer Kurbel vorgesehen sein kann.

In einer vorteilhaften Ausgestaltung ist ein Koppelmechanismus vorgesehen, der durch Verschieben der Fahrzeugscheibe in eine Schaltposition betätigbar ist. Durch Verschieben der Fahrzeugscheibe in die Schaltposition wird dabei entweder das (flexible) Flächengebilde mit der Fahrzeugscheibe gekoppelt oder von dieser entkoppelt. Ein anschließendes Bewegen der Fahrzeugscheibe erfolgt dann entsprechend mit dem bzw. ohne das (flexible) Flächengebilde. Die Schaltposition befindet sich vorzugsweise außerhalb eines zum Öffnen und Schließen der Fahrzeugscheibe vorgesehenen Verfahrwegs. Bei einem Bewegen entlang des Verfahrwegs findet dabei kein Koppeln oder Entkoppeln statt. Durch Bewegung der Fahrzeugscheibe über den zum Öffnen und Schließen der Fensteröffnung durch die Fensterscheibe erforderlichen Verfahrweg hinaus, kann die Fahrzeugscheibe in die Schaltposition zum Koppeln bzw. Entkoppeln gebracht werden.

In einer vorteilhaften Ausgestaltung weist ein Betätigungsmechanismus zum Bewegen der Fahrzeugscheibe einen steuer- und/oder regelbaren Stellantrieb auf. Durch den Stellantrieb ist eine einfache Bewegung der Fahrzeugscheibe ohne zusätzliche Krafteinwirkung durch den Nutzer möglich. Zudem ist ein ferngesteuertes Bewegen der Fahrzeugscheibe, beispielsweise von einem Fahrersitz aus möglich. Hierfür können im Bereich des Fahrersitzes entsprechende Betätigungsschalter oder dergleichen vorgesehen sein.

In einer weiteren Ausgestaltung der Erfindung ist der Stellantrieb durch eine Steuereinrichtung derart ansteuer- oder regelbar, dass die Schaltposition selektiv anfahrbar ist. Eine Selektion erfolgt dabei beispielsweise durch einen Betätigungsschalter und/oder ein Bedienfeld. Erfolgt beispielsweise die Auswahl "Fenster öffnen", so wird die Schaltposition nicht angefahren. Bei einer Auswahl "Sonnenschutz" und/oder "Sonnenschutz entfernen", wird dagegen die Schaltposition zum Koppeln mit dem Flächengebilde bzw. zum Entkoppeln des Flächengebildes angefahren.

Die Aufgabe wird weiter gelöst durch eine Steuereinrichtung für eine erfindungsgemäße Vorrichtung nach einem der Ansprüche 6-10, wobei durch die Steuereinrichtung ein Stellantrieb zum Koppeln des Auszugselements mit der Fahrzeugscheibe ansteuerbar ist. Durch eine entsprechende Steuereinrichtung ist beispielsweise ein ferngesteuertes Betätigen eines Koppelmechanismus möglich.

In einer Ausgestaltung der Erfindung ist der Stellantrieb in einen Betätigungsmechanismus zum Bewegen der Fahrzeugscheibe integriert. Durch einen entsprechenden Betätigungsmechanismus ist ein ferngesteuertes Verschieben der Fahrzeugscheibe ohne zusätzliche Krafteinwirkung durch den Nutzer möglich. Durch Integration des Stellantriebs des Kopplungsmechanismus in den Stellantrieb der Fahrzeugscheibe ist ein besonders kompakter Aufbau möglich.

In einer vorteilhaften Ausgestaltung ist der Stellantrieb durch die Steuereinrichtung derart ansteuer- oder regelbar, dass von der Fahrzeugscheibe selektiv eine Schaltposition anfahrbar ist, wobei durch Anfahren der Schaltposition ein Kopplungsmechanismus betätigbar ist. Der Stellantrieb wird dabei in einer Ausführungsform durch die Steuereinrichtung in Abhängigkeit einer Position eines Betätigungsschalters oder dergleichen angesteuert.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine erfindungsgemäße Vorrichtung zum Abdecken einer Fahr- zeugfensteröffnung in einer Schnittansicht;
- Fig. 2:: die Vorrichtung gemäß Fig. 1, wobei eine Fahrzeugscheibe außerhalb einer Schaltposition ist in einer Schnittansicht;
- Fig. 3:: eine alternative Ausführungsform einer erfindungsgemäßen Vorrichtung zum Abdecken einer Fahrzeugfensteröffnung in ei- ner Schnittansicht;
- Fig. 4: die Vorrichtung gemäß Fig. 3, wobei eine Fahrzeugscheibe in einer Schaltposition ist in einer Schnittansicht;
- Fig. 5:: ein Detail V gemäß Fig. 3 in einer perspektivischen Darstel- lung;
- Fig. 6:: einen Schieber für einen Schaltschlitten eines Koppelmecha- nismus in einer Seitenansicht
- Fig. 7a:: einen Schaltschlitten in einer ersten Position in einer teilweise freigeschnittenen Seitenansicht
- Fig. 7b:: den Schaltschlitten in einer zweiten Position in einer teilweise freigeschnittenen Seitenansicht und
- Fig. 7c:: den Schaltschlitten in einer dritten Position in einer teilweise freigeschnittenen Seitenansicht

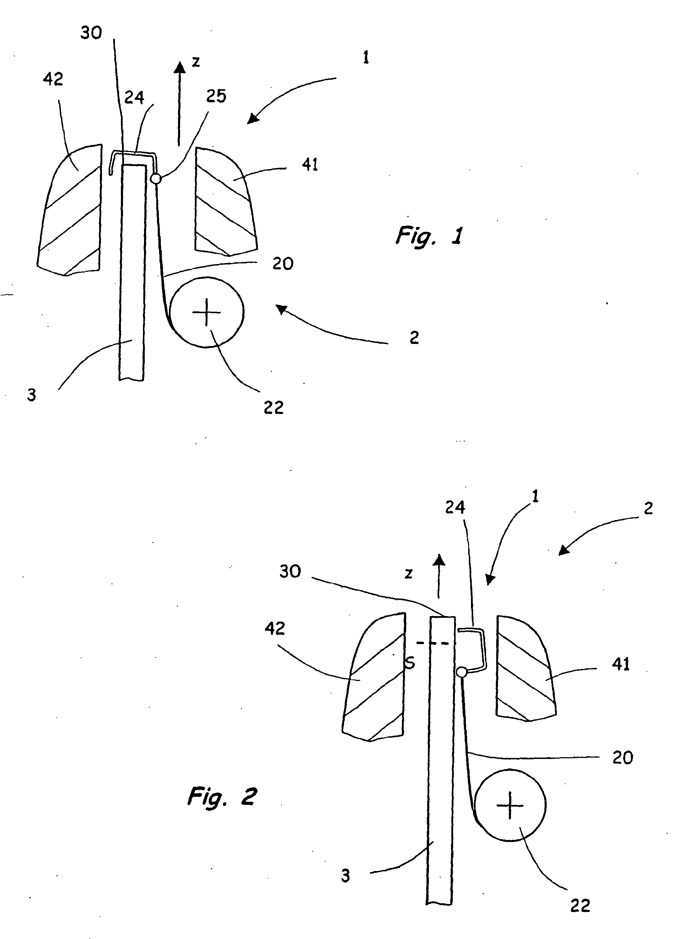

Fig. 1 zeigt eine gattungsgemäße Vorrichtung 1 zum Abdecken einer nicht dargestellten Fahrzeugfensteröffnung in einer geschnittenen Seitenansicht. Die Vorrichtung 1 umfasst eine Abdeckeinrichtung 2 und eine verschieblich gelagerte Fahrzeugscheibe 3, wobei die Fahrzeugscheibe 3 in eine Richtung z zum Verschließen der Fensteröffnung bzw. entgegen der Richtung z zum Öffnen der Fensteröffnung verschiebbar ist. Die Vorrichtung 1 ist im dargestellten Ausführungsbeispiel an einer Fensterbrüstung zwischen einer Innenwandung 41 und einer Außenwandung 42 einer nicht weiter dargestellten hinteren Seitentür des Kraftfahrzeugs angeordnet.

Die Abdeckeinrichtung 2 umfasst ein flexibles Flächengebilde 20, welches zwischen einer in Fig. 1 dargestellten Verstauposition und einer nicht dargestellten Gebrauchsposition verfahrbar ist, wobei das Flächengebilde 20 in der Gebrauchsposition die Fahrzeugscheibe 3 zumindest teilweise abdeckt. Die dargestellte Abdeckeinrichtung 2 umfasst weiter eine Wickelwelle 22, auf welche das flexible Flächengebilde 20 bei Nichtgebrauch in der Verstauposition platzsparend aufwickelbar ist. Zum Aufwickeln des Flächengebildes 20 auf die Wickelwelle 22 kann dabei eine nicht dargestellte Wickelfeder vorgesehen sein.

Zum Abwickeln und Verfahren des flexiblen Flächengebildes 20 umfasst die Abdeckeinrichtung 2 ein mit dem Flächengebilde 20 wirkverbundenes Auszugselement 24, welches mit der Fahrzeugscheibe 3 für eine Bewegungsübertragung koppelbar ist. Zum Koppeln mit der Fahrzeugscheibe 3 ist das Auszugselement 24 in dem dargestellten Ausführungsbeispiel über ein Drehgelenk oder Scharnier 25 mit dem Flächengebilde 20 verbunden. Das in dem dargestellten Ausführungsbeispiel im Querschnitt U-förmig gestaltete Auszugselement 24 ist mittels des Scharniers 25 derart verschwenkbar, dass es wie in Fig. 1 dargestellt, die Fahrzeugscheibe 3 an deren Oberkante 30 umgreift. Beim Bewegen der Fahrzeugscheibe 3 zum Schließen der Fensteröffnung in Richtung z wird die Bewegung der Fahrzeugscheibe 3 auf die Abdeckeinrichtung 2 übertragen.

Fig. 2 zeigt die Vorrichtung 1 gemäß Fig. 1, wobei die Fahrzeugscheibe 3 in eine Position bewegt wurde, in welcher die Oberkante 30 der Fahrzeugscheibe 3 sich oberhalb einer Ebene S befindet. In dieser Position verhindert die Fahrzeugscheibe 3, dass das Auszugselement 24 sich selbsttätig über die Fahrzeugscheibe 3 legt. Erst mit Anfahren einer beispielsweise in Fig. 1 dargestellten Position wird es möglich, dass das Auszugselement 24 beispielsweise aufgrund einer Vorspannung einer nicht dargestellten Feder selbsttätig verschwenkt und so die Abdeckeinrichtung 2 mit der Fahrzeugscheibe 3 für eine Bewegungsübertragung gekoppelt wird.

Beim Öffnen einer Fahrzeugfensteröffnung, beispielsweise einer Seitenfensteröffnung, durch Bewegen der Fahrzeugscheibe 3 wird diese beispielsweise bis maximal in die in Fig. 2 dargestellte Position verfahren, in welcher die Oberkante 30 oberhalb der Ebene S liegt. Wird die Fahrzeugscheibe 3 durch Bewegung in Richtung z aus der in Fig. 2 dargestellten Position geschlossen, so verbleibt die Abdeckeinrichtung 2 in der in Fig. 2 dargestellten Verstauposition. Soll dagegen die Fahrzeugscheibe 3 durch die Abdeckeinrichtung 2 verdeckt werden, so kann die Fahrzeugscheibe 3 in eine Schaltposition bewegt werden, in welcher die Oberkante 30 unterhalb der Ebene S zu liegen kommt. In dieser Position wird das Auszugselement 24 um die Oberkante 30 der Fahrzeugscheibe 3 - wie in Fig. 1 dargestellt - verschwenkt. Beim erneuten Bewegen der Fahrzeugscheibe 3 zum Schließen der Fensteröffnung ist die Fahrzeugscheibe 3 durch das flexible Flächengebilde 20 verdeckt. Ein Entkoppeln des Mitnehmers 24 von der Fahrzeugscheibe 3 kann dabei beispielsweise manuell und/oder durch einen in den Fig. 1 und 2 nicht dargestellten Mechanismus erfolgen.

Die Fahrzeugscheibe 3 ist manuell und/oder über einen Stellantrieb bewegbar. Zum Bewegen der Abdeckeinrichtung 2 ist dabei kein zusätzlicher Stellantrieb notwendig. Der Stellantrieb zur Bewegung der Fahrzeugscheibe 3 ist in einer Ausgestaltung derart ansteuerbar, dass die Fahrzeugscheibe 3 verschiedene Positionen anfahren kann. Durch ein Öffnen der Fahrzeugscheibe 3 über einen üblichen Verfahrweg hinaus und Bewegen der Fahrzeugscheibe 3 in eine Schaltposition ist so ein Koppeln des Auszugselements 24 mit der Fahrzeugscheibe 3 ferngesteuert, beispielsweise durch einen Fahrer des Fahrzeugs von einem Fahrzeugsitz aus, möglich.

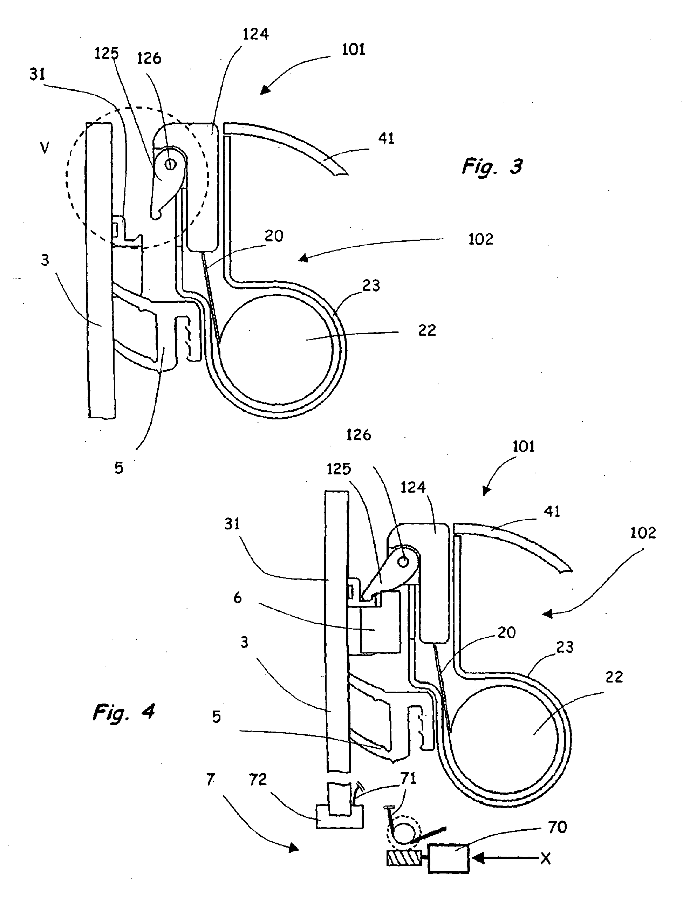

Fig. 3 zeigt schematisch eine erfindungsgemäße Vorrichtung 101 umfassend eine Abdeckeinrichtung 102 und eine Fahrzeugscheibe 3. Die Vorrichtung 101 entspricht im Wesentlichen der Vorrichtung 1 gemäß Fig. 1. Für gleiche Bauteile werden dabei einheitliche Bezugszeichen verwendet und auf eine detaillierte Beschreibung bereits beschriebener Bauteile wird verzichtet. Die Wickelwelle 22 ist in dem dargestellten Ausführungsbeispiel in einer Kassette 23 gelagert. Weiter ist zum Abdichten in dem dargestellten Ausführungsbeispiel eine Abdichtlippe 5 vorgesehen.

Das Auszugselement ist als Auszugprofil 124 gestaltet, welches mit dem flexiblen Flächengebilde 20 an dessen freier, der Wickelwelle 22 gegenüberliegender Kante verbunden ist. An dem Auszugselement 124 ist ein verschwenkbarer Mitnehmer 125 über eine Achse 126 verschwenkbar angebracht. Die Achse 126 verläuft Im Wesentlichen parallel zu der Längsrichtung des Auszugsprofils 124.

In dem dargestellten Ausführungsbeispiel ist ein zweiter Mitnehmer 31 fest mit der Fahrzeugscheibe 3 verbunden. Der zweite Mitnehmer 31 ist beispielsweise mit der Fahrzeugscheibe 3 verklebt und/oder auf sonstige Weise an dieser fest angebracht. Der mit dem Flächengebilde 20 verbundene Mitnehmer 125 und der mit der Fahrzeugscheibe 3 verbundene Mitnehmer 31 weisen zueinander komplementäre Konturen auf, so dass die Mitnehmer 125, 31 für eine Bewegungsübertragung ineinander greifen können. Zu diesem Zweck wird der Mitnehmer 125 um die Achse 126 verschwenkt.

Zum Verschwenken und Koppeln des Mitnehmers 125 mit dem Mitnehmer 31 der Fahrzeugscheibe 3 kann ein Schaltelement, insbesondere ein verschiebbarer Schaltschlitten, vorgesehen sein.

Fig. 4 zeigt die Vorrichtung 101 gemäß Fig. 3, wobei der Mitnehmer 125 durch einen Schaltschlitten 6 verschoben ist, so dass der Mitnehmer 125 in Eingriff mit dem an der Fahrzeugscheibe 3 angebrachten Mitnehmer 31 gelangt. Der Schaltschlitten 6 ist Teil eines Koppelmechanismus. In der dargestellten Ausführungsform ist der Koppelmechanismus mit einer push-push-Mechanik gestaltet, wobei durch Anfahren einer gemeinsamen Schaltposition der Mitnehmer 125 mit der Fahrzeugscheibe 3 gekoppelt bzw. entkoppelt wird. Ohne Anfahren der Schaltposition erfolgt dagegen keine Veränderung des Zustands, d.h. der Mitnehmer 125 bleibt entkoppelt bzw. gekoppelt. Die Schaltposition liegt dabei außerhalb eines zum Öffnen und Schließen der Fahrzeugscheibe 3 notwendigen Verfahrwegs. Durch Verfahren der Fahrzeugscheibe 3 in eine Position außerhalb des Verfahrwegs erfolgt somit das Koppeln bzw. Entkoppeln.

Die Fahrzeugscheibe 3 ist zu diesem Zweck durch einen Stellantrieb 7 umfassend einen schematisch dargestellten Motor 70 verfahrbar. Eine Bewegung der Abtriebswelle des Motors 70 wird über einen Bowdenzug 71 auf einen Fensterhalter 72 zum Verfahren der Fahrzeugscheibe 3 übertragen. Der Motor 70 ist über ein Steuersignal X zum Antreiben der Fahrzeugscheibe 3 ansteuerbar, wobei in Abhängigkeit des Steuersignals X eine Schaltposition selektiv anfahrbar ist.

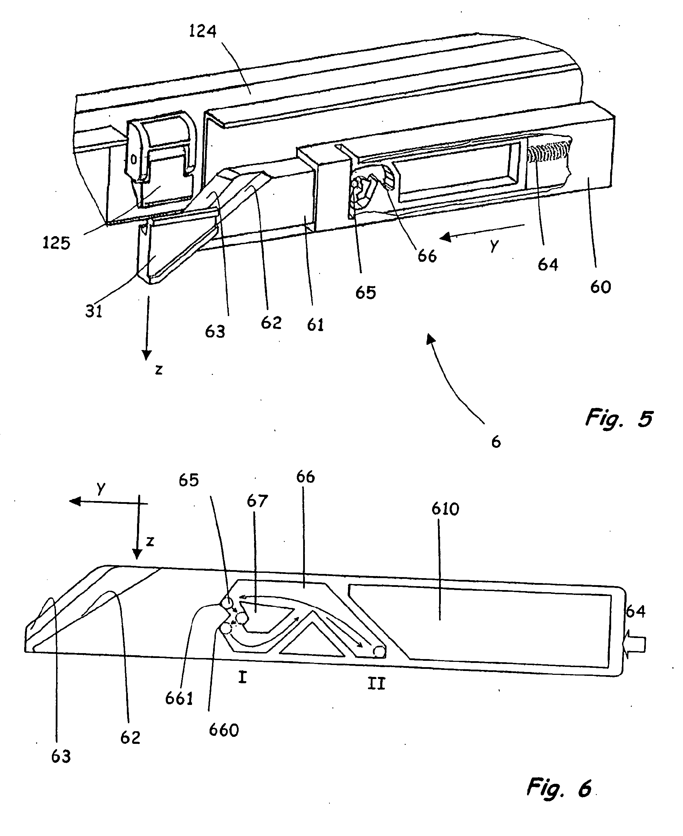

Fig. 5 zeigt schematisch ein Detail V gemäß Fig. 3 in einer perspektivischen Darstellung, wobei zum besseren Verständnis die Fahrzeugscheibe 3 gemäß Fig. 3 nicht dargestellt ist. Wie in Fig. 5 erkennbar, ist der dargestellte Schaltschlitten 6 zweiteilig gestaltet, umfassend eine Hülse 60 und einen verschieblich darin gelagerten Schieber 61. Der Schieber 61 weist zwei Schaltflächen 62, 63 auf, welche aus der Hülse 60 hervorragen. Ein als Feder gestaltetes Kraftelement 64 beaufschlagt dabei den Schieber 61 mit einer Kraft in eine Richtung y, so dass der Schieber 61 aus der Hülse 60 gezwungen wird. Der starr an der in Fig. 3 dargestellten Fahrzeugscheibe 3 angeordnete fensterseitige Mitnehmer 31 wirkt bei einer Bewegung in z-Richtung mit der Schaltfläche 62 derart zusammen, dass bei einem Kontakt des Mitnehmers 31 mit der Schaltfläche 62 der Schieber 61 entgegen der Kraft der in der Hülse 60 angeordneten Feder 64 verschoben wird. Die zweite Schaltfläche 63 wirkt mit dem an dem Auszugsprofil 124 angeordneten Mitnehmer 125 zusammen, wobei durch den Kontakt der Mitnehmer 125 verschwenkt wird, so dass der Mitnehmer 125 mit dem fensterseitigen Mitnehmer 31 gekoppelt wird.

An der Hülse 60 ist ein in z-Richtung verschieblich gelagerter Stift 65 vorgesehen, welcher mit einer an dem Schieber 61 ausgebildeten, herzkurvenförmigen Kulissenbahn 66 zusammenwirkt.

Fig. 6 zeigt schematisch eine mögliche Bewegung des Stiftes 65 relativ zu der herzkurvenförmigen Kulissenbahn 66. Die Kulissenbahn 66 ist definiert durch eine Aussparung in dem Schieber 61 und ein in der Aussparung angeordnetes Rastelement 67. Der Schieber 61 ist in y-Richtung durch das Kraftelement 64 (schematisch dargestellt durch einen Pfeil) belastet. Befindet sich der Stift 65 in einer ersten Rastposition I, so begrenzt das Rastelement 67 eine Bewegung des Schiebers 61 in y-Richtung. Der Schieber 61 ist entgegen der Kraft des Kraftelements 64 verschiebbar, wobei die Bewegung durch Anschlagen des Stiftes 65 an einem unteren Herzbogen 660 der Kulissenbahn 66 begrenzt ist. Aufgrund der einwirkenden Kraft des Kraftelements 64 ist diese Position nicht stabil und der Schieber 61 wird aus dieser Position wieder in y-Richtung bewegt. Dabei kommt der Stift 65 in einer hinteren Rastposition II zum liegen. Bei einem erneuten Verschieben des Schiebers 61 entgegen der durch den Pfeil dargestellten Kraft wird der Stift 65 derart geführt, dass er an dem oberen Herzbogen 661 zu liegen kommt. Ohne äußere Einwirkung zum Verschieben des Schiebers 61 stellt das Kraftelement 64 den Schieber 61 wieder in die Rastposition I zurück.

In Abhängigkeit der Rastposition I, II steht der Schieber 61 unterschiedlich weit aus der in Fig. 5 dargestellten Hülse 60 hervor. Befindet sich der Schieber 61 in der hinteren Rastposition II, so steht der Schieber 61 soweit aus der Hülse 60 hervor, dass die Schaltfläche 63 mit dem an dem Auszugprofil 124 schwenkbar angebrachten Mitnehmer 125 zusammen wirkt. Dabei wird der Mitnehmer 125 verschwenkt, so dass der Mitnehmer 125 mit dem komplementär dazu ausgebildeten Mitnehmer 31 an der Fahrzeugscheibe in Eingriff kommt. Dadurch wird das Auszugprofil 124 mit der in Fig. 3 dargestellten Fahrzeugscheibe gekoppelt. Zur Gewichtseinsparung weist der dargestellte Schieber 61 eine Aussparung 610 auf.

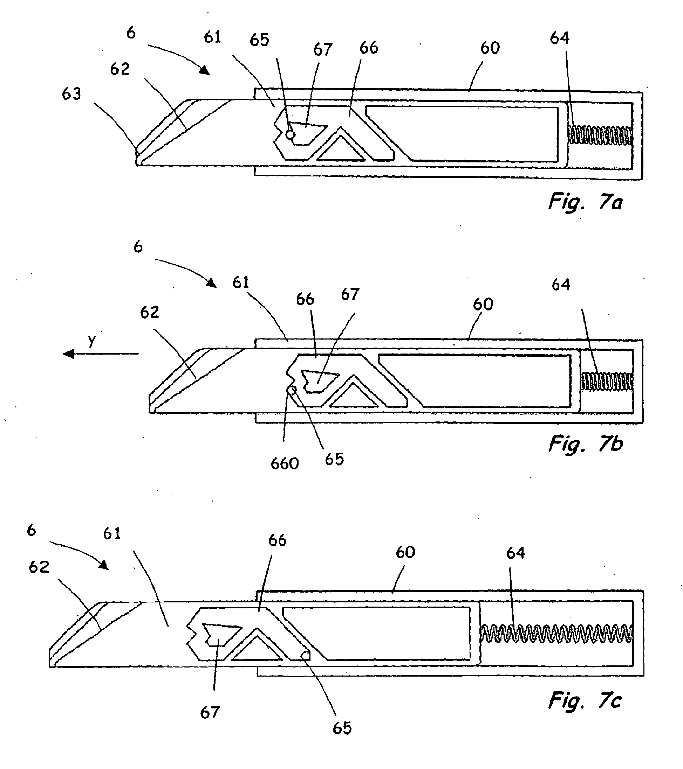

Die Fig. 7a bis 7c zeigen schematisch den Schaltschlitten 6 in einer teilweise geschnittenen Seitenansicht, wobei verschiedene Schaltstellungen dargestellt sind. In einer in Fig. 7a dargestellten ersten Schaltstellung verrastet der Stift 65 mit dem Rastelement 67 derart, dass eine Bewegung des Schiebers 61 in die y-Richtung aufgrund einer Rückstellkraft der Feder 64 verhindert wird. Dabei wird der in Fig. 5 dargestellte Mitnehmer 125 nicht verschwenkt und beim Hochfahren der Fahrzeugscheibe 3 ist diese nicht mit dem Auszugsprofil 124 gekoppelt.

Beim (erneuten) Anfahren der Schaltposition wirkt der in den Fig. 7a bis 7c nicht dargestellte, mit der Fahrzeugscheibe (ebenfalls nicht dargestellt) verbundene Mitnehmer 31 mit der Schaltfläche 62 derart zusammen, dass der Schieber 61 entgegen der Kraft der Feder 64 verschoben wird. Durch eine geeignete Gestaltung des Rastelements 67 wird der Stift 65 dabei derart bewegt, dass er in dem unteren Herzbogen 660 geführt wird. Diese Position des Schlittens 61 ist in Position 7b dargestellt.

Bei Wegfall einer Kraft- und/oder Bewegungseinwirkung an der Schaltfläche 62 wird der Schieber 61 aufgrund des Kraftelements 64 so bewegt, dass der Stift 65 in die zweite Rastposition II der herzkurvenförmigen Kulissenbahn 66 einrastet. Diese zweite Rastposition ist in Fig. 7c dargestellt. Dabei wird der Schieber 61 in y- Richtung verstellt, so dass die Schaltfläche 63 mit dem an dem Auszugprofil 124 gemäß Fig. 5 angeordneten Mitnehmer 125 zusammenwirken kann. Der Mitnehmer 125 wird dadurch verschwenkt, so dass dieser mit dem ebenfalls in Fig. 5 dargestellten Mitnehmer 31 gekoppelt wird. Wird die in Fig. 3 dargestellte Fahrzeugscheibe 3 anschließend erneut geschlossen, so wird die Abdeckeinrichtung 102 so verfahren, dass das Flächengebilde 20 die Fahrzeugscheibe 3 zumindest teilweise abdeckt.

Bei einem erneuten Bewegen des Schiebers 61 entgegen der y-Richtung durch erneutes Anfahren der Schaltposition, verrastet der Stift 65 wieder in der in Fig. 7a dargestellten Rastposition I, II an dem Rastelement 67. Dadurch werden die in Fig. 5 dargestellten Mitnehmer 31, 124 beim Bewegen der Fahrzeugscheibe 3 aus der Schaltposition nicht erneut gekoppelt.

Im Betrieb ist es beispielsweise möglich, zum Verdecken der Fahrzeugscheibe 3 mit dem flexiblen Flächengebilde 20 durch ein Bedienelement, wie beispielsweise einen Taster, ein Bedienfeld oder eine andere, beliebige Mensch-Maschine-Schnittstelle, mittels eines nicht dargestellten Steuerantriebs ein Signal für den beispielsweise in Fig. 4 dargestellten Stellantrieb 7 zu erzeugen, so dass durch die Fahrzeugscheibe 3 eine Schaltposition angefahren wird. In dieser Schaltposition wirkt der Mitnehmer 31 mit dem Schieber 61 derart zusammen, dass ein nicht mit der Fahrzeugscheibe 3 gekoppeltes Auszugselement, beispielsweise ein Auszugprofil 124 gemäß den Fig. 3 bis 5, mit einem entsprechenden Element der Fahrzeugscheibe 3, beispielsweise dem Mitnehmer 31 gemäß den Fig. 3 bis 5, gekoppelt wird. Ebenso kann die Schaltposition zum Entfernen des flexiblen Flächengebildes 20 von der Fahrzeugscheibe 3 angefahren werden. Daneben ist es möglich, durch den Stellantrieb 7 die Fahrzeugscheibe 3 innerhalb eines Verfahrwegs zum Öffnen und Schließen einer Fensteröffnung zu bewegen. Solange eine Schaltposition außerhalb des Verfahrwegs der Fahrzeugscheibe 3 liegt, erfolgt dabei kein Koppeln bzw. Entkoppeln der Abdeckeinrichtung 102 mit der Fahrzeugscheibe 3.

## Patentansprüche

1. Abdeckeinrichtung für eine verschiebbar gelagerte Fahrzeugscheibe (3) umfassend ein Flächengebilde (20) und ein mit dem Flächengebilde (20) wirkverbundenes Auszugselement (124), wobei das Flächengebilde (20) mittels des Auszugselements (124) aus einer Verstauposition in eine Gebrauchsposition und/oder aus der Gebrauchsposition in die Verstauposition verfahrbar ist und in der Gebrauchsposition die Fahrzeugscheibe (3) von dem Flächengebilde (20) zumindest teilweise abgedeckt ist, wobei das Auszugselement (124) mit der Fahrzeugscheibe (3) für eine Bewegungsübertragung koppelbar ist,
**gekennzeichnet durch** einen
Koppelmechanismus zur Kopplung des Auszugselement (124) mit der Fahrzeugscheibe (3), wobei dieser Kopplungsmechanismus ein Schaltelement und eine push-push-Mechanik umfasst.

2. Abdeckeinrichtung nach Anspruch 1, **dadurch gekennzeichnet, dass** das Schaltelement als verschiebbarer Schaltschlitten (6) ausgebildet ist.

3. Abdeckeinrichtung nach Anspruch 1 oder 2, **dadurch gekennzeichnet, dass** der Koppelmechanismus eine Herzkurven-Verriegelung umfasst.

4. Abdeckeinrichtung nach Anspruch 2 oder 3, **dadurch gekennzeichnet, dass** das Schaltelement, insbesondere der Schaltschlitten (6), eine Steuerfläche (62) aufweist, welche zum Bewegen des Schaltelements mit einem an der Fahrzeugscheibe (3) angebrachten Mitnehmer (31) zusammenwirkt.

5. Abdeckeinrichtung nach einem der Ansprüche 1 bis 4, **dadurch gekennzeichnet, dass** das mit dem Flächengebilde (20) wirkverbundene Auszugselement (124) mit der Fahrzeugscheibe (3) form- und/oder kraftschlüssig koppelbar ist.

6. Vorrichtung zum Abdecken einer Fahrzeugfensteröffnung umfassend eine verschieblich lagerbare Fahrzeugscheibe (3) und eine Abdeckeinrichtung (102) nach einem der Ansprüche 1 bis 5.

7. Vorrichtung nach Anspruch 6, **gekennzeichnet durch** einen Koppelmechanismus zum Koppeln eines Auszugselements (124) der Abdeckeinrichtung (102) mit der Fahrzeugscheibe (3).

8. Vorrichtung nach Anspruch 7, **dadurch gekennzeichnet, dass** der Koppelmechanismus durch Verschieben der Fahrzeugscheibe (3) in eine Schaltposition betätigbar ist.

9. Vorrichtung nach Anspruch 6, 7 oder 8, **dadurch gekennzeichnet, dass** ein Betätigungsmechanismus zum Bewegen der Fahrzeugscheibe (3) einen steuer- und/oder regelbaren Stellantrieb (7) aufweist.

10. Vorrichtung nach Anspruch 9, **dadurch gekennzeichnet, dass** der Stellantrieb (7) durch eine Steuereinrichtung derart ansteuer- oder regelbar ist, dass selektiv die Schaltposition anfahrbar ist.

11. Steuereinrichtung für eine Vorrichtung nach einem der Ansprüche 6 bis 10, wobei durch die Steuereinrichtung ein Stellantrieb (7) zum Koppeln des Auszugselements (124) mit der Fahrzeugscheibe (3) ansteuerbar ist.

12. Steuereinrichtung nach Anspruch 11, **dadurch gekennzeichnet, dass** der Stellantrieb (7) in eine Betätigungsmechanik zum Bewegen der Fahrzeugscheibe (3) integriert ist.

13. Steuereinrichtung nach Anspruch 12, **dadurch gekennzeichnet, dass** der Stellantrieb (7) durch die Steuereinrichtung derart ansteuer- oder regelbar ist, dass selektiv die Schaltposition anfahrbar ist.

## Claims

1. Covering device for a slidably mounted vehicle window (3) comprising a planar structure (20) and a pull-out element (124) operatively connected to the planar structure (20), where said planar structure (20) can be moved out of a stowed position into an in-use position and/or out of the in-use position into the stowed position by means of the pull-out element (124), and where the vehicle window (3) is at least partially covered in the in-use position by the planar structure (20), and where the pull-out element (124) can be coupled to the vehicle window (3) for a movement transmission,
**characterized by** a
coupling mechanism for coupling the pull-out element (124) to the vehicle window (3), where said coupling mechanism comprises a switching element and a push-push mechanism.

2. Covering device according to Claim 1, **characterized in that** the switching element is designed as a slidable switching slide (6).

3. Covering device according to Claim 1 or 2, **characterized in that** the coupling mechanism comprises a heart-shaped cam locking device.

4. Covering device according to Claim 2 or 3, **characterized in that** the switching element, in particular the switching slide (6), has a control face (62) which interacts with a driver (31) attached to the vehicle window (3) for moving the switching element.

5. Covering device according to one of Claims 1 to 4, **characterized in that** the pull-out element (124) operatively connected to the planar structure (20) can be positively and/or non-positively coupled to the vehicle window (3).

6. Device for covering of a vehicle window opening comprising a slidably mountable vehicle window (3) and a covering device (102) according to one of Claims 1 to 5.

7. Device according to Claim 6, **characterized by** a coupling mechanism for coupling a pull-out element (124) of the covering device (102) to the vehicle window (3).

8. Device according to Claim 7, **characterized in that** the coupling mechanism can be actuated by movement of the vehicle window (3) into a switching position.

9. Device according to Claim 6, 7 or 8, **characterized in that** an actuating mechanism for moving the vehicle window (3) has an actuating drive (7) with open-loop and/or closed-loop control.

10. Device according to Claim 9, **characterized in that** the actuating drive (7) can be operated or controlled by a control device such that the switching position can be selectively approached.

11. Control device for a device according to one of Claims 6 to 10, where an actuating drive (7) can be operated by the control device for coupling the pull-out element (124) to the vehicle window (3).

12. Control device according to Claim 11, **characterized in that** the actuating drive (7) is integrated into an actuating mechanism for moving the vehicle window (3).

13. Control device according to Claim 12, **characterized in that** the actuating drive (7) can be operated or controlled by the control device such that the switching position can be selectively approached.

## Revendications

1. Dispositif de recouvrement pour une vitre de véhicule (3) logée de manière coulissante, lequel comprend une structure plane (20) et un élément de déroulement (124) relié activement à la structure plane (20), sachant qu'au moyen de l'élément de déroulement (124), la structure plane (20) peut être transférée d'une position rangée à une position d'utilisation et/ou de la position d'utilisation à la position rangée, et que dans la position d'utilisation, la vitre de véhicule (3) est recouverte au moins partiellement par la structure plane (20), l'élément de déroulement (124) pouvant être couplé à la vitre de véhicule (3) pour une transmission de mouvement,
**caractérisé par** un
mécanisme de couplage destiné à coupler l'élément de déroulement (124) avec la vitre de véhicule (3), ce mécanisme de couplage comprenant un élément de commande et un mécanisme push-push.

2. Dispositif de recouvrement selon la revendication 1, **caractérisé en ce que** l'élément de commande est conçu en tant que coulisseau de commande (6) mobile.

3. Dispositif de recouvrement selon la revendication 1 ou 2, **caractérisé en ce que** le mécanisme de couplage comprend un verrouillage cardioïde.

4. Dispositif de recouvrement selon la revendication 2 ou 3, **caractérisé en ce que** l'élément de commande, en particulier le coulisseau de commande (6), présente une face de commande (62) qui agit conjointement avec un entraîneur (31) fixé sur la vitre de véhicule (3) pour mettre en mouvement l'élément de commande.

5. Dispositif de recouvrement selon l'une des revendications 1 à 4, **caractérisé en ce que** l'élément de déroulement (124) relié activement à la structure plane (20) peut être couplé par complémentarité de forme et/ou par force à la vitre de véhicule (3).

6. Système pour recouvrir une ouverture de fenêtre de véhicule, comprenant une vitre de véhicule (3) pouvant être logée de manière coulissante et un dispositif de recouvrement (102) selon l'une des revendications 1 à 5.

7. Système selon la revendication 6, **caractérisé par** un mécanisme de couplage destiné à coupler un élément de déroulement (124) du dispositif de recouvrement (102) avec la vitre de véhicule (3).

8. Système selon la revendication 7, **caractérisé en ce que** le mécanisme de couplage peut être actionné par coulissement de la vitre de véhicule (3) dans une position de commutation.

9. Système selon la revendication 6, 7 ou 8, **caractérisé en ce qu'**un mécanisme de commande présente un servomoteur (7) pilotable et/ou régulable afin de mettre en mouvement la vitre de véhicule (3).

10. Système selon la revendication 9, **caractérisé en ce que** le servomoteur (7) peut être activé ou régulé par un dispositif de commande de manière telle que la position de commutation peut être atteinte de manière sélective.

11. Dispositif de commande pour un système selon l'une des revendications 6 à 10, dans lequel un servomoteur (7) peut être activé par le dispositif de commande afin de coupler l'élément de déroulement (124) avec la vitre de véhicule (3).

12. Dispositif de commande selon la revendication 11, **caractérisé en ce que** le servomoteur (7) est intégré dans un mécanisme d'actionnement pour mettre en mouvement la vitre de véhicule (3).

13. Dispositif de commande selon la revendication 12, **caractérisé en ce que** le servomoteur (7) est activable ou régulable par le dispositif de commande de manière telle que la position de commutation peut être atteinte de manière sélective.
